# FASCICULE DE BREVET EUROPEEN

(11) **EP 1 267 062 B1**
(45) Date de publication et mention de la délivrance du brevet: **01.09.2004**
(21) Numéro de dépôt: 02291358.6
(22) Date de dépôt: 04.06.2002
(51) Int. Cl.: F02K 3/02, F02K 3/075, F02K 3/12

(54) **Dispositif de propulsion à cycle variable par prélèvement d'air comprimé pour avion supersonique**
Schubvorrichtung mit variablen Betriebszyklen mit aufgeteilter Verdichterluft für Überschallflugzeuge
Variable cycle propulsion device for supersonic airplanes using diverted compressed air

(30) Priorité: 14.06.2001 FR 0107773
(43) Date de publication de la demande: 18.12.2002
(73) Titulaire: SNECMA MOTEURS, 75015 Paris (FR)
(72) Inventeur: Franchet, Michel, 77240 Pouilly-Le-Fort (FR); Laugier, Yann, 94880 Noiseau (FR); Loisy, Jean, 77310 Ponthierry (FR)
(74) Mandataire: Thévenet, Jean-Bruno

(56) Documents cités:
- FR-A- 2 784 960
- GB-A- 1 211 081
- US-A- 2 409 177
- US-A- 4 193 262
- SAITO Y ET AL: "CONCEPTUAL STUDY OF SEPARATED CORE ULTRAHIGH BYPASS ENGINE" JOURNAL OF PROPULSION AND POWER, AMERICAN INSTITUTE OF AERONAUTICS AND ASTRONAUTICS. NEW YORK, US, vol. 9, no. 6, 1 novembre 1993 (1993-11-01), pages 867-873, XP000412352 ISSN: 0748-4658

## Description

### Arrière-plan de l'invention

La présente invention est relative à un dispositif de propulsion à cycle variable pour avion supersonique qui permet d'obtenir, d'une part au décollage, à l'atterrissage et en vol en croisière subsonique une forte poussée et un haut taux de dilution afin d'abaisser fortement le bruit lors de ces phases de vol et d'améliorer la consommation spécifique, et d'autre part une forte vitesse d'éjection adaptée au vol en croisière supersonique.

Elle vise plus particulièrement un dispositif de propulsion qui comporte deux configurations différentes; l'une pour le décollage, l'atterrissage et le vol en croisière subsonique, et l'autre pour le vol en croisière supersonique.

Lors de la conception d'un avion commercial supersonique, il se pose notamment le problème du faible bruit du moteur de l'avion au décollage, en montée et à l'atterrissage de celui-ci. En effet, afin d'être certifiés, tous les avions doivent maintenant respecter les réglementations quant au faible bruit au décollage et à l'atterrissage.

Par ailleurs, les moteurs d'avions supersoniques doivent également répondre aux exigences de faible traînée des nacelles en croisière supersonique, de faible consommation spécifique pendant le survol de zones habitées en vitesse de croisière subsonique, et de réduction des émissions polluantes d'oxydes d'azote à proximité de la couche d'ozone à haute altitude.

Afin de répondre à ces différentes exigences, les constructeurs de moteurs ont proposé un moteur à cycle variable pour la propulsion d'avions supersoniques. Typiquement, ce type de moteur comporte un générateur de gaz et au moins une soufflante, cette dernière permettant d'ajuster le taux de dilution du moteur et donc de réduire le bruit. Ce moteur adopte deux configurations différentes; l'une pour le vol en croisière subsonique, le décollage et l'atterrissage à haut taux de dilution, et l'autre pour le vol en croisière supersonique à bas taux de dilution car il existe une certaine incompatibilité entre ces deux phases de vol pour le fonctionnement du moteur.

En effet, l'exigence sur le faible bruit du moteur au décollage et à l'atterrissage implique notamment une faible vitesse d'éjection des gaz au décollage et en vitesse de croisière subsonique, ce qui est en contradiction avec un vol en croisière supersonique qui impose une forte vitesse d'éjection des gaz.

Or, le niveau de bruit dépend de la vitesse d'éjection des gaz, et pour réduire celui-ci à un niveau acceptable, cette vitesse doit être aujourd'hui inférieure à 400 mètres par seconde ce qui correspond à un seuil de 103dB (300m/s soit 90dB à partir de 2006 selon les nouvelles réglementations). Une telle vitesse d'éjection implique donc un moteur à faible poussée spécifique, ce qui correspond à un taux de dilution important, c'est à dire une forte traînée en vol de croisière supersonique.

Ainsi, les moteurs à cycle variable proposés par les constructeurs essaient de combiner le faible niveau de bruit au décollage et à l'atterrissage, une faible consommation spécifique en croisière subsonique et une forte poussée spécifique en croisière supersonique à haute altitude.

On connaît plusieurs concepts de moteurs à cycle variable, mais la variation du taux de dilution de ces derniers n'offre pas une bonne optimisation dans les configurations subsonique et supersonique.

En effet, adopter une vitesse d'éjection des gaz égale ou inférieure à 400m/s exige une nacelle de moteur de diamètre important et tous les moteurs à cycle variable connus à ce jour, notamment ceux décrits dans les brevets FR 2 513 697, FR 2 688 271 et FR 2 685 385, requièrent une section frontale de la nacelle plus importante que celle optimisée pour le vol en croisière supersonique quand la soufflante est liée et intégrée au moteur.

On connaît par exemple du brevet américain US 5,529,263 la description d'un avion supersonique comportant un ensemble propulsif pour le décollage, l'atterrissage et le vol en croisière subsonique et deux propulseurs adaptés au vol en croisière supersonique. L'ensemble propulsif est constitué de turboréacteurs d'appoint escamotables à haut taux de dilution, ce qui présente de nombreux inconvénients, notamment d'encombrement et de poids pour l'appareil.

On connaît aussi le brevet US2409177 qui décrit un dispositif de propulsion subsonique dont l'un des deux propulseurs aliment en air l'autre propulseur.

### Objet et résumé de l'invention

La présente invention vise donc à pallier de tels inconvénients en proposant un dispositif de propulsion à cycle variable pour avions supersoniques qui sépare nettement les deux configurations, subsonique et supersonique, grâce notamment à l'utilisation de une ou plusieurs soufflantes auxiliaires dissociées de grand diamètre.

A cet effet, il est prévu un dispositif de propulsion à cycle variable pour avion supersonique comprenant au moins deux propulseurs ayant chacun au moins un compresseur et capables de générer une poussée pour les vitesses de vol supersonique et au moins un ensemble propulsif auxiliaire, distinct des propulseurs, capable de générer un complément de poussée pour le décollage, l'atterrissage et les vitesses de vol subsonique, ledit dispositif étant caractérisé en ce qu'il comporte en outre au moins une conduite reliant chaque propulseur à l'ensemble propulsif auxiliaire pour acheminer à ce dernier de l'air comprimé produit par le compresseur afin que ledit ensemble propulsif auxiliaire génère un complément de poussée pour le décollage, l'atterrissage et le vol en croisière subsonique, et au moins une vanne permettant d'obturer la conduite pour le vol en croisière supersonique, l'ensemble propulsif auxiliaire étant logé dans un fuselage d'avion afin de réduire la traînée pour le vol en croisière supersonique.

Ainsi, l'ensemble propulsif auxiliaire utilise pour la phase de décollage et d'atterrissage et le vol en croisière subsonique utilise des ressources (production d'air comprimé) des propulseurs. L'air comprimé est prélevé par exemple au dernier étage du compresseur de chaque propulseur et alimente une chambre de combustion de l'ensemble propulsif. Ce dernier comprend au moins une soufflante qui peut être dimensionnée pour produire la poussée nécessaire avec le taux de dilution souhaité au décollage, à l'atterrissage et en vol subsonique. L'ensemble propulsif est logé dans le fuselage, de sorte que la traînée en vol supersonique peut être minimale.

### Brève description des dessins

D'autres caractéristiques et avantages de la présente invention ressortiront de la description faite ci-dessous, en référence aux dessins annexés, de plusieurs modes de réalisation dépourvus de tout caractère limitatif. Sur les figures :
- les figures 1a et 1b représentent une vue schématique en coupe longitudinale d'un dispositif de propulsion selon un premier mode de réalisation de l'invention, en configuration respectivement pour le décollage, l'atterrissage et le vol en croisière subsonique et pour le vol en croisière supersonique ;
- la figure 2 est une vue schématique et partielle d'un avion comportant un dispositif de propulsion semblable à celui de la figure 1, dans ses deux configurations d'utilisation ;
- la figure 3 est une vue schématique et partielle d'un avion comportant un dispositif de propulsion selon un autre mode de réalisation de l'invention dans ses deux configurations d'utilisation.

### Description détaillée de modes de réalisation

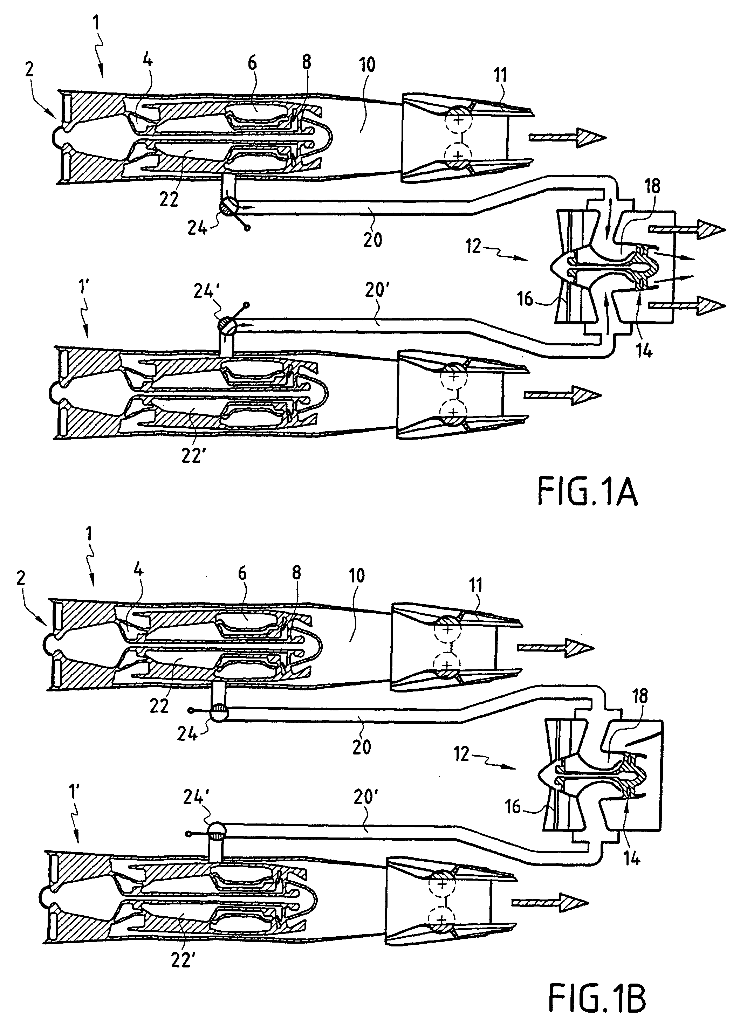

Si on se réfère aux figures 1a et 1b qui représentent schématiquement une coupe longitudinale d'un dispositif selon un premier mode de réalisation de l'invention, on voit que celui-ci est notamment constitué de deux propulseurs 1 et 1'. Ces propulseurs sont classiquement disposés dans des nacelles de faible traînée (non représentées) qui sont généralement reliées à la face inférieure d'une aile d'avion.

De façon connue, ces propulseurs peuvent être du type monoflux à simple corps, double corps ou triple corps ou encore du type double-flux à simple, double ou triple corps. Dans cet exemple de réalisation, ils comportent notamment chacun une entrée d'air 2, une section de compression 4, une chambre de combustion 6, une section de turbine 8 et une section d'éjection 10 des gaz de combustion. Les propulseurs sont en outre dimensionnés de façon optimale pour le vol en croisière supersonique (période de vol la plus longue). La section d'éjection des gaz se termine par une tuyère 11 à section variable.

De plus, toujours selon ce premier mode de réalisation de l'invention, le dispositif de propulsion comporte également un ensemble propulsif auxiliaire 12, distinct des deux propulseurs 1 et 1'. Cet ensemble propulsif auxiliaire est utilisé pour le décollage, l'atterrissage et le vol en croisière subsonique selon une configuration qui sera détaillée plus loin.

L'ensemble propulsif 12 comporte une turbine 14, une soufflante 16 et une chambre de combustion 18 qui est alimentée en carburant par l'intermédiaire de moyens classiquement utilisés (non représentés sur les figures 1a et 1b).

Par ailleurs, le dispositif de propulsion selon l'invention comporte au moins une conduite 20, 20' reliant chaque propulseur 1, 1' à l'ensemble propulsif 12, et plus particulièrement à la chambre de combustion 18 de ce dernier, pour acheminer audit ensemble propulsif de l'air comprimé produit par au moins un compresseur 22, 22' de chaque propulseur.

Plus précisément, chaque conduite 20, 20' débouche au niveau d'un collecteur d'air comprimé, de préférence annulaire, positionné autour de la chambre de combustion 18 de l'ensemble propulsif 12.

De façon avantageuse, le prélèvement en air comprimé est réalisé au niveau du dernier étage des compresseurs 22, 22' de chaque propulseur 1, 1'. Bien entendu, il peut être effectué à un niveau différent des compresseurs, le dernier étage offrant néanmoins les meilleurs résultats puisque c'est l'endroit où l'air est le plus fortement comprimé.

Classiquement, la soufflante 16 peut être mono ou multi-étage, à large corde ou contrarotative, et elle est entraînée en rotation par la turbine 14 qui peut éventuellement être d'extrémité, munie d'un moyeu multi-étage et/ou d'un réducteur.

Par ailleurs, chaque conduite 20, 20' acheminant l'air comprimé à l'ensemble propulsif 12 est munie d'au moins une vanne 24, 24' permettant d'obturer au moins partiellement cette conduite pour le vol en croisière supersonique. Les vannes 24, 24' sont commandées en synchronisme.

Selon une caractéristique particulière de l'invention, les conduites 20, 20' reliant chaque propulseur 1, 1' à la chambre de combustion 18 de l'ensemble propulsif 12 acheminent environ 20% à 40%, de préférence 25% à 30% de l'air comprimé provenant du dernier étage des compresseurs 22, 22' de chaque propulseur, cela notamment dans le cas de propulseurs destinés à un régime de croisière supersonique correspondant à un nombre de Mach de 2 environ.

On décrira maintenant le fonctionnement du dispositif de propulsion selon ce premier mode de réalisation de l'invention, dans ses deux configurations possibles (phase de décollage, d'atterrissage et vol en croisière subsonique et phase de vol en croisière supersonique).

Au cours du décollage et de l'atterrissage (cf. figure 1a), les trois ensembles (les deux propulseurs 1 et 1' et l'ensemble propulsif 12) fournissent simultanément la poussée et les deux propulseurs voient leur poussée et leur vitesse d'éjection réduites en raison du prélèvement d'air au compresseur. Les conduites 20, 20' ne sont pas obturées et acheminent donc de l'air comprimé à la chambre de combustion 18 de l'ensemble propulsif auxiliaire.

L'air comprimé ainsi acheminé est alors mélangé au carburant et les gaz de combustion produits par la chambre de combustion 18 de l'ensemble propulsif 12 traversent alors la turbine 14 qui entraîne la soufflante 16 dudit ensemble propulsif afin de générer un complément de poussée suffisant pour le décollage, l'atterrissage et le vol en croisière subsonique.

Par un dimensionnement adapté de la soufflante 16, le dispositif de propulsion peut travailler à haut taux de dilution et à faible vitesse d'éjection ce qui est bien adapté aux phases de décollage et de vol en croisière subsonique tout en répondant plus facilement aux exigences de bruit et de faible consommation spécifique. Par taux de dilution, on entend le rapport entre la masse d'air éjectée produite par les soufflantes et la masse des gaz de combustion éjectés produits par les chambres de combustion des propulseurs 1, 1'.

La transition entre la phase de vol en croisière subsonique et celle de vol en croisière supersonique (cf. figure 1b) s'effectue alors en obturant les conduites 20, 20' par l'intermédiaire des vannes 24, 24' et en interrompant l'alimentation de la chambre de combustion 18 en carburant jusqu'à l'arrêt de l'ensemble propulsif auxiliaire 12. Les propulseurs 1 et 1' assurent alors seuls la propulsion de l'avion et permettent à celui-ci d'atteindre des vitesses de vol supersonique. Le dispositif fonctionne ainsi à un très faible (voire nul) taux de dilution et forte vitesse d'éjection (ce qui correspond bien à une forte poussée spécifique).

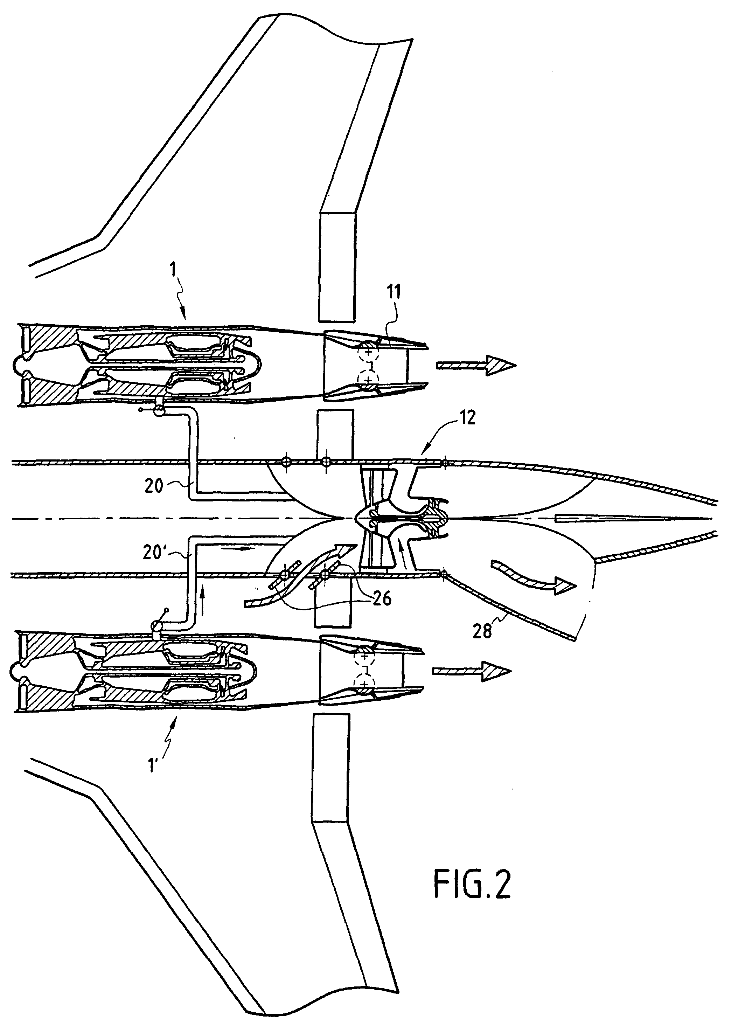

Comme montré par la figure 2, l'ensemble propulsif auxiliaire 12 peut être intégré directement dans le fuselage de l'avion, dans la partie arrière de celui-ci. Pour ce faire, des ouïes 26 (latérales comme illustrées et/ou ventrales) escamotables sont disposées sur le fuselage de l'avion afin d'assurer l'alimentation en air de l'ensemble propulsif 12, et des tuyères d'échappement déployables 28 permettent d'évacuer les gaz produits par l'ensemble propulsif auxiliaire pendant les phases de décollage, d'atterrissage et de vol en croisière subsonique.

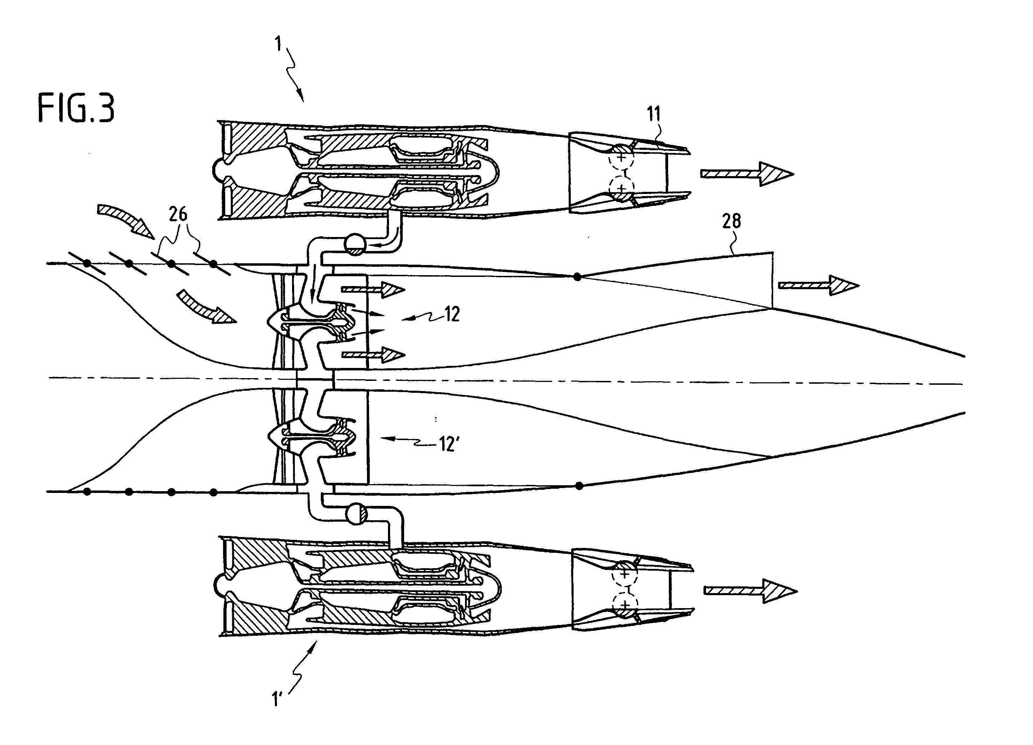

Selon un autre mode de réalisation de l'invention (cf. figure 3), le dispositif comporte deux propulseurs 1 et 1' alimentant indépendamment en air comprimé deux ensembles propulsifs auxiliaires 12 et 12'. Ce mode de réalisation améliore la sécurité du dispositif de propulsion lorsque l'un des ensembles propulsifs tombe en panne.

Par ailleurs, ces deux ensembles propulsifs peuvent être avantageusement décalés le long de l'axe principal de l'avion afin d'optimiser l'encombrement de l'ensemble.

Sur la figure 3, on voit que des ouïes 26 (latérales et/ou ventrales) obturables sont également prévues sur le fuselage de l'avion pour assurer l'alimentation en air des ensembles propulsifs 12 et 12' pendant le décollage, l'atterrissage et le vol en croisière subsonique, et des tuyères d'échappement 28 sont déployées afin d'évacuer les gaz produisant la poussée lors de ces phases de vol. Au passage en vol de croisière supersonique, ces ouïes 26 sont obturées après arrêt des ensembles propulsifs auxiliaires 12, 12', et les tuyères d'échappement 28 sont escamotées. La traînée se trouve alors réduite à la seule traînée de nacelle des propulseurs.

Bien entendu, on pourra imaginer tout autre mode de réalisation en combinant un ou plusieurs propulseurs avec un ou plusieurs ensembles propulsifs.

La présente invention telle que décrite précédemment comporte de multiples avantages, et notamment :
- le dispositif de propulsion permet d'obtenir au décollage et à l'atterrissage une vitesse d'éjection des gaz inférieure à 400m/s (voire proche de 300m/s) ce qui correspond à un niveau de bruit inférieur à 103dB (90dB pour une vitesse inférieure à 300m/s);
- la poussée au décollage du ou des propulseur(s) peut par exemple être augmentée par rapport à celle du ou des propulseur(s) fonctionnant seul(s) par un effet multiplicateur de 50 à 60% environ suivant le diamètre de la soufflante de l'ensemble propulsif auxiliaire ;
- une forte baisse de la consommation spécifique en croisière subsonique peut être obtenue grâce à un haut taux de dilution qui est équivalent à celui de certains avions subsoniques ;
- le dispositif de propulsion utilise un ou plusieurs propulseurs à architecture conventionnelle ce qui limite les risques de panne fréquemment liés aux technologiques nouvelles ;
- en cas de panne ou d'extinction de l'ensemble propulsif auxiliaire, la fermeture de vanne de prélèvement et le passage en jet direct à pleine puissance peut permettre de maintenir une poussée suffisante pour continuer le décollage puis assurer l'atterrissage, la préoccupation n'étant plus de respecter les normes de bruit mais d'éviter tout accident à l'avion.

Il demeure bien entendu que la présente invention n'est pas limitée aux exemples de réalisation décrits ci-dessus mais qu'elle en englobe toutes les variantes.

## Revendications

1. Dispositif de propulsion à cycle variable pour avion supersonique comprenant au moins deux propulseurs (1, 1') ayant chacun au moins un compresseur (22, 22') et capables de générer une poussée pour les vitesses de vol supersonique et au moins un ensemble propulsif auxiliaire (12, 12'), distinct desdits propulseurs, capable de générer un complément de poussée pour le décollage, l'atterrissage et les vitesses de vol subsonique, ledit dispositif étant **caractérisé en ce qu'**il comporte en outre au moins une conduite (20, 20') reliant chaque propulseur (1, 1') à l'ensemble propulsif auxiliaire (12, 12') pour acheminer à ce dernier de l'air comprimé produit par le compresseur (22, 22') afin que ledit ensemble propulsif auxiliaire génère un complément de poussée pour le décollage, l'atterrissage et le vol en croisière subsonique, et au moins une vanne (24, 24') permettant d'obturer la conduite pour le vol en croisière supersonique, ledit ensemble propulsif auxiliaire (12, 12') étant logé dans un fuselage d'avion afin de réduire la traînée pour le vol en croisière supersonique.

2. Dispositif selon la revendication 1, **caractérisé en ce que** l'ensemble propulsif auxiliaire (12, 12') comporte une chambre de combustion (18) alimentée en air comprimé lors du décollage, de l'atterrissage et du vol en croisière subsonique, une turbine (14) traversée par des gaz de combustion produits par ladite chambre de combustion, et une soufflante (16) entraînée en rotation par ladite turbine.

3. Dispositif selon l'une des revendications 1 et 2, **caractérisé en ce que** l'air acheminé par la conduite (20, 20') est produit au niveau d'un dernier étage du compresseur (22, 22') et correspond à environ 20% à 40% de la quantité totale d'air fourni par ledit compresseur.

4. Dispositif selon l'une quelconque des revendications 1 à 3, **caractérisé en ce qu'**il comporte deux ensembles propulsifs (12, 12') alimentés indépendamment en air comprimé par les deux propulseurs (1, 1') de manière à améliorer la sécurité lorsque l'un desdits ensembles propulsifs tombe en panne.

5. Dispositif selon la revendication 4, **caractérisé en ce que** les deux ensembles propulsifs (12, 12') sont décalés le long d'un axe principal de l'avion de manière à optimiser l'encombrement.

6. Dispositif selon l'une quelconque des revendications 1 à 5, **caractérisé en ce que** des ouïes (26) sont aménagées sur le fuselage pour assurer l'alimentation en air du ou des ensembles propulsifs (12, 12') pendant le décollage, l'atterrissage et le vol en croisière subsonique, et des tuyères d'échappement escamotables (28) sont prévues afin d'évacuer les gaz produisant la poussée lors de ces phases de vol.

## Patentansprüche

1. Schubvorrichtung mit variablen Betriebszyklen für Überschallflugzeuge, umfassend mindestens zwei Triebwerke (1, 1'), die jeweils mindestens einen Verdichter (22, 22') besitzen und einen Schub für die Überschallfluggeschwindigkeiten erzeugen können, und mindestens eine Hilfsschubeinheit (12, 12'), die von den Triebwerken getrennt ist und einen ergänzenden Schub für den Start, die Landung und die Überschallfluggeschwindigkeiten erzeugen kann, wobei die Vorrichtung **dadurch gekennzeichnet ist, dass** sie ferner mindestens eine Leitung (20, 20'), die jedes Triebwerk (1, 1') mit der Hilfsschubeinheit (12, 12') verbindet, um zu dieser letztgenannten von dem Verdichter (22, 22') erzeugte Druckluft zu leiten, damit die Hilfsschubeinheit einen ergänzenden Schub für den Start, die Landung und den Überschallflug erzeugt, und mindestens ein Ventil (24, 24') umfasst, das es ermöglicht, die Leitung für den Überschallflug zu verschließen, wobei die Hilfsschubeinheit (12, 12') im Flugzeugrumpf angeordnet ist, um den Luftwiderstand für den Überschallflug zu verringern.

2. Vorrichtung nach Anspruch 1, **dadurch gekennzeichnet, dass** die Hilfsschubeinheit (12, 12') eine Verbrennungskammer (18), die beim Start, bei der Landung und beim Überschallflug mit Druckluft gespeist wird, eine Turbine (14), durch die hindurch von der Verbrennungskammer erzeugte Verbrennungsgase ziehen, und ein in Drehung von der Turbine angetriebenes Gebläse (16) umfasst.

3. Vorrichtung nach einem der Ansprüche 1 und 2, **dadurch gekennzeichnet, dass** die von der Leitung (20, 20') zugeleitete Luft im Bereich einer letzten Stufe des Verdichters (22, 22') erzeugt wird und ungefähr 20 % bis 40 % der Gesamtmenge der von dem Verdichter gelieferten Luft entspricht.

4. Vorrichtung nach einem der Ansprüche 1 bis 3, **dadurch gekennzeichnet, dass** sie zwei Schubeinheiten (12, 12') umfasst, die unabhängig voneinander von den beiden Triebwerken (1, 1') mit Druckluft gespeist werden, um die Sicherheit zu verbessern, wenn eine der Schubeinheiten eine Panne hat.

5. Vorrichtung nach Anspruch 4, **dadurch gekennzeichnet, dass** die beiden Schubeinheiten (12, 12') entlang einer Hauptachse des Flugzeugs versetzt sind, um den Platzbedarf zu optimieren.

6. Vorrichtung nach einem der Ansprüche 1 bis 5, **dadurch gekennzeichnet, dass** Lufteinlassöffnungen (26) auf dem Flugzeugrumpf vorgesehen sind, um die Luftversorgung der Schubeinheit(en) (12, 12') während des Starts, der Landung und des Überschallflugs sicher zu stellen, und dass einziehbare Ableitungsrohre (28) vorgesehen sind, um die den Schub während dieser Flugphasen erzeugenden Gase abzuleiten.

## Claims

1. A variable cycle propulsion system for a supersonic airplane, the system comprising at least two engines (1, 1') with each of them having at least one compressor (22, 22') and capable of generating thrust for supersonic flight speeds, and at least one auxiliary propulsion assembly (12, 12') separate from said engines, and capable of generating additional thrust for takeoff, landing, and subsonic flight speeds, said system being **characterised in that** it further comprises at least one pipe (20, 20') connecting each engine (1, 1') to the auxiliary propulsion assembly (12, 12') to convey thereto compressed air produced by the compressor (22, 22') so as to enable said auxiliary propulsion assembly to generate additional thrust for takeoff, landing, and subsonic cruising flight, and at least one valve (24, 24') enabling the pipe to be closed off for supersonic cruising flight, with said auxiliary propulsion assembly (12, 12') being housed in an airplane fuselage in order to reduce the drag for supersonic cruising flight.

2. A system according to claim 1, **characterised in that** the auxiliary propulsion assembly (12, 12') has a combustion chamber (18) fed with compressed air during takeoff, landing, and subsonic cruising flight, a turbine (14) through which the combustion gas produced by said combustion chamber passes, and a fan (16) rotated by said turbine.

3. A system according to claim 1 or claim 2, **characterised in that** the air conveyed by the pipe (20, 20') is produced at a last stage of the compressor (22, 22') and corresponds to about 20% to 40% of the total amount of air provided by said compressor.

4. A system according to any one of claims 1 to 3, **characterised in that** it comprises two engines (1, 1') feeding compressed air independently to two propulsion assemblies (12, 12') so as to improve safety in the event of one of said propulsion assemblies failing.

5. A system according to claim 4, **characterised in that** the two propulsion assemblies (12, 12') are offset along a main axis of the airplane so as to optimise the way in which volume is occupied therein.

6. A system according to any one of claims 1 to 5, **characterised in that** louvers (26) are provided in the fuselage to feed air to the propulsion assembly(ies) (12, 12') during takeoff, landing, and subsonic cruising flight, and retractable exhaust nozzles (28) are provided in order to exhaust the thrust-producing gas during said stages of flight.
